# FASCICULE DE BREVET EUROPEEN

(11) **EP 1 152 136 B1**
(45) Date de publication et mention de la délivrance du brevet: **09.11.2005**
(21) Numéro de dépôt: 01401058.1
(22) Date de dépôt: 25.04.2001
(51) Int. Cl.: F01N 11/00

(54) **Dispositif et procédé de détection de la dégradation d'un convertisseur catalytique**
Vorrichtung und Verfahren zum Feststellen der Verschlechterung eines Katalysators
Apparatus and method to detect the degradation of a catalytic converter

(30) Priorité: 05.05.2000 FR 0005782
(43) Date de publication de la demande: 07.11.2001
(73) Titulaire: JOHNSON CONTROLS AUTOMOTIVE ELECTRONICS, 95520 Osny (FR)
(72) Inventeur: Chailland, Philippe, 95523 Cergy Pontoise (FR); Nicole, Eric, 95523 Cergy Pontoise (FR)
(74) Mandataire: Fruchard, Guy

(56) Documents cités:
- EP-A- 0 667 446
- EP-A- 0 715 063
- EP-A- 0 796 985
- US-A- 5 313 791
- US-A- 5 394 744

## Description

La présente invention concerne la détection de la dégradation d'un convertisseur catalytique trois voies placé sur le circuit d'échappement d'un moteur à combustion interne prévu pour que les chambres de combustion reçoivent un mélange homogène. L'invention s'applique notamment aux moteurs à allumage par étincelle fonctionnant à l'essence ou au gaz de pétrole liquéfié, à carburateur ou à injection dans la tubulure d'admission.

Un convertisseur catalytique trois voies est destiné à réduire la teneur des gaz d'échappement en oxydes d'azote Nox, en oxyde de carbone CO et en hydrocarbures imbrûlés. Un tel convertisseur trois voies retient de l'oxygène provenant de la réduction de l'oxyde d'azote et simultanément utilise l'oxygène retenu pour oxyder les hydrocarbures et le monoxyde d'azote. La dégradation progressive du catalyseur se traduit notamment par la réduction de sa capacité de retenir l'oxygène.

Les règlements actuels ou en projet exigent d'équiper les véhicules d'un dispositif capable de déceler la diminution du rendement catalytique lorsqu'elle atteint un seuil déterminé et de fournir alors une alarme au conducteur.

On connaît du document US 5,394,744 un dispositif de détection de la dégradation d'un convertisseur catalytique trois voies placé sur un circuit d'échappement d'un moteur à combustion interne dont les chambres reçoivent un mélange homogène, comprenant un capteur non proportionnel placé en aval du convertisseur sur le trajet des gaz d'échappement, des moyens de filtrage du signal de sortie du capteur éliminant la composante continue du signal, des moyens de fourniture d'une moyenne glissante du signal filtré par intégration et division, des moyens de comparaison de ladite moyenne avec un seuil et des moyens pour inhiber les moyens de fourniture de la moyenne et les moyens de comparaison pendant le fonctionnement du moteur à pleine charge.

Toutefois, dans le dispositif décrit, les moyens de filtrage comprennent un filtre passe bas et pour effectuer un test significatif, il est nécessaire d'agir sur la richesse du mélange pour amener celle-ci dans des conditions permettant d'effectuer une mesure. Une telle ingérence dans le fonctionnement du moteur rend plus complexe la régulation du fonctionnement normal du moteur.

Un autre dispositif de détection de la dégradation d'un convertisseur catalytique est connue notamment par le document US 5,313,791 A.

La présente invention vise à fournir un dispositif de détection de dégradation répondant mieux que ceux antérieurement connus aux exigences de la pratique, notamment en évitant toute intervention sur le réglage de la richesse tout en utilisant uniquement le signal de sortie d'un capteur placé en aval du convertisseur.

L'invention propose en conséquence un dispositif de détection de la dégradation d'un convertisseur catalytique du type décrit dans le document précité, dans lequel les moyens de filtrage comprennent un filtre passe-bande ayant une bande passante à mi-hauteur comprise entre 0,9 Hertz et la limite de réponse du catalyseur dans un état de fonctionnement correct.

Il est possible d'utiliser un tel dispositif du fait que le résultat recherché n'est pas une surveillance permanente de l'état du convertisseur catalytique, mais seulement une détection de la dégradation, qu'il suffit de déceler lorsqu'elle devient certaine.

En général, les moyens de filtrage seront constitués par un filtre passe-bande ayant une bande passante à mi-hauteur comprise entre 0,9 et 4 Hertz environ, pouvant être réglable. La limite de 4 Hertz correspond à la limite de réponse de la plupart des catalyseurs dans leur état de fonctionnement correct. La limitation de la bande passante à 4 Hertz permet d'éliminer la plupart des perturbations d'origine électromagnétique ou provenant de réactions parasites de mélange dans le collecteur d'échappement lors des bouffées de sortie des chambres de combustion. On peut être amené à choisir des valeurs légèrement différentes, suivant le type du moteur et le type du catalyseur.

Le dispositif peut être constitué par un ensemble indépendant, comportant des circuits propres pour effectuer le filtrage et le calcul de moyenne, sous forme analogique ou sous forme numérique. Mais dans la plupart des cas, tous les calculs nécessaires seront effectués sous forme numérique, en plaçant un échantillonneur à convertisseur analogique - numérique entre le capteur et l'entrée d'un organe de calcul, qui peut être le calculateur de contrôle moteur réglant notamment l'injection de combustible. En effectuant des calculs sous forme numérique, on peut réaliser sans difficulté des moyens de filtrage à fond raide, par exemple à l'aide d'un filtre de Butterworth, ou d'un filtre de Tschebichev.

Les moyens fournissant une moyenne donnent un signal représentatif de la puissance moyenne sur un laps de temps déterminé, l'intégration fournissant une énergie correspondant à plusieurs échantillons successifs. En général, on utilisera une durée d'intégration de l'ordre de 3 secondes + ou -1 seconde.

Dans un mode particulier de réalisation, le dispositif comporte deux branches de calcul de moyenne et de comparaison avec un seuil. L'une de ces branches est mise en oeuvre lors du fonctionnement au ralenti, et l'autre lors du fonctionnement en régime établi hors ralenti. Dans ce cas, les calculs de moyenne glissante seront avantageusement faits sur des périodes différentes, par exemple de 4 secondes au ralenti et 2,5 à 3 secondes hors ralenti.

Dans tous les cas, les moyens d'inhibition, constitués généralement par le calculateur de contrôle moteur, interrompra le fonctionnement lors de conditions de fonctionnement déterminées, décelées à partir de signaux représentatifs de la vitesse et de ses variations, de la richesse (supérieure à 1 à pleine charge), du ralenti, de la température, et du fonctionnement en frein moteur.

L'invention propose également un procédé de détection de dégradation suivant lequel, en dehors de la pleine charge, on soumet le signal provenant d'une sonde à oxygène non proportionnelle placée en aval du catalyseur à un échantillonnage et une numérisation, on soumet les échantillons numérisés à un filtrage actif passe-bande éliminant la composante continue du signal, on détermine une moyenne glissante de la puissance du signal filtré par intégration et division, et on compare la moyenne à un seuil.

Les caractéristiques ci-dessus ainsi que d'autres apparaîtront mieux à la lecture de la description qui suit d'un mode particulier de réalisation, donné à titre d'exemple non limitatif. La description se réfère à la figure unique qui l'accompagne et qui est un schéma synoptique du dispositif.

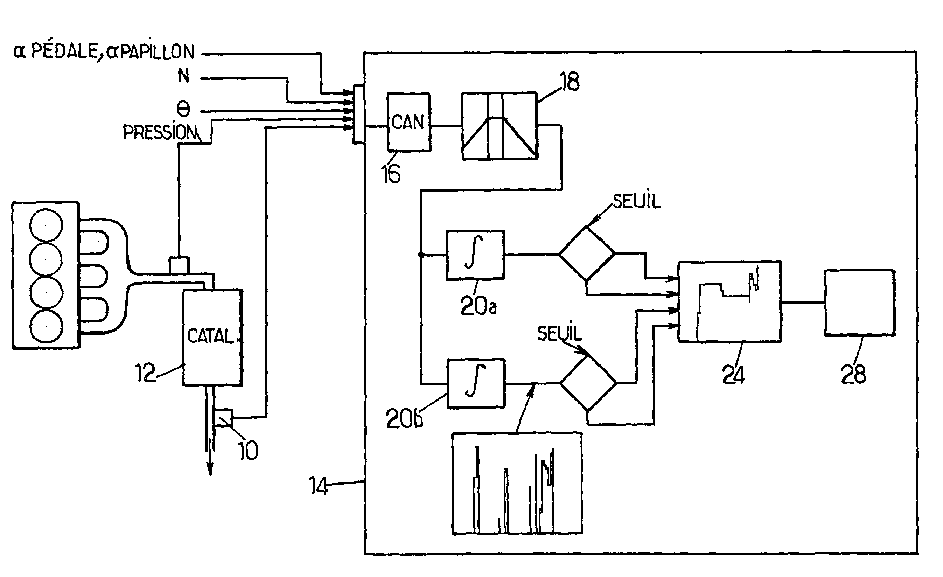

Le dispositif montré en figure 1 utilise comme signal d'entrée la tension de sortie d'un capteur 10, qui sera généralement une sonde lambda, placé à la sortie du convertisseur catalytique 12 d'un moteur. Ce signal de sortie est généralement utilisé par le calculateur de contrôle moteur 14 pour participer à l'élaboration de la consigne de quantité de carburant à injecter. Cette consigne prend également en compte d'autres paramètres et surtout l'angle α d'ouverture du papillon d'air, la vitesse du moteur N et la température θ. La consigne de quantité injectée est fournie sur une sortie S.

Le dispositif est représenté sur la figure 1 sous forme de blocs successifs correspondant pour la plupart à des opérations de calcul. Mais, dans la pratique, les opérations de calcul seront effectuées non pas par des composants discrets, mais par le calculateur de contrôle moteur 14.

Le signal de sortie du capteur 10 est soumis à conversion analogique numérique en 16, par échantillonnage et numérisation. En général, on utilisera une cadence d'échantillonnage constante, par exemple de 15,6 Hz.

Le signal numérisé, par exemple sur 10 bits, est appliqué à des moyens de filtrage 18 permettant d'isoler la partie significative du signal. On utilisera généralement un filtre numérique actif à flancs raides. On peut notamment utiliser un filtre de Butterworth d'ordre trois au moins, permettant d'obtenir des flancs ayant une atténuation de 40dB par décade.

Les moyens de filtrage 18 alimentent deux branches, dont une seule est activée à la fois par le calculateur de contrôle moteur 14. Chaque branche comprend des moyens de calcul de moyenne glissante, par intégration sur une durée déterminée et division par le nombre d'échantillons sur lequel a été effectuée la moyenne. Les moyens 20a d'une première branche sont activés pendant des périodes de fonctionnement hors pleine charge et hors ralenti. Les moyens 20b de la seconde branche sont activés lors du fonctionnement au ralenti. Les moyens 20a effectuent par exemple une moyenne sur une durée de 2,5 à 3 secondes tandis que les moyens 20b fournissent une moyenne sur une durée de 4 secondes pour tenir compte du moindre nombre de cycles moteur.

Dans le mode de réalisation illustré sur la figure, les signaux de sortie des moyens 20a et 20b, représentatifs de la puissance unitaire par impulsion, sont comparés à deux seuils déterminés expérimentalement et correspondant aux limites admises pour un catalyseur afin de respecter les normes de pollution. Pour chaque échantillon, un signal est appliqué à l'entrée de comptage 22 d'un compteur 24 si le test est positif et montre que le seuil est excédé (catalyseur éventuellement dégradé). Si le test est négatif, l'impulsion est appliquée sur une entrée de décomptage du compteur 24. En règle générale, le comptage sera effectué en incrémentant le compteur à chaque fois d'un nombre de bits plus élevé qu' à chaque décomptage. Par exemple, chaque incrément en réponse à un signal appliqué sur l'entrée 22 sera de +3, tandis que chaque décrément sera de -1. Des moyens de diagnostic 28 provoqueront un avertissement visuel ou sonore lorsque le contenu du compteur atteint une valeur déterminée.

L'utilisation d'un tel comptage permet d'effectuer une estimation statistique de l'état de dégradation du catalyseur.

## Revendications

1. Dispositif de détection de la dégradation d'un convertisseur catalytique trois voies placé sur un circuit d'échappement d'un moteur à combustion interne dont les chambres reçoivent un mélange homogène, comprenant un capteur non proportionnel (10) placé en aval du convertisseur (12) sur le trajet des gaz d'échappement, des moyens (18) de filtrage du signal de sortie du capteur éliminant la composante continue du signal, des moyens (20a, 20b) de fourniture d'une moyenne glissante du signal filtré par intégration et division, des moyens (24) de comparaison de ladite moyenne avec un seuil et des moyens pour inhiber les moyens de fourniture de la moyenne et les moyens de comparaison pendant le fonctionnement du moteur à pleine charge, **caractérisé en ce que** les moyens de filtrage comprennent un filtre passe-bande (18) ayant une bande passante à mi-hauteur comprise entre 0,9 Hertz et la limite de réponse du catalyseur dans un état de fonctionnement correct.

2. Dispositif suivant la revendication 1, **caractérisé en ce que** les moyens de filtrage (18) ont une bande passante à mi-hauteur comprise entre 0,9 et 4 Hertz environ et réglable.

3. Dispositif suivant la revendication 1 ou 2, **caractérisé en ce qu'**il comporte un échantillonneur à convertisseur analogique - numérique (16) entre le capteur (10) et l'entrée d'un organe de calcul comprenant lesdits moyens ou les constituant.

4. Dispositif suivant la revendication 1, 2 ou 3, **caractérisé en ce que** les moyens de filtrage (18) alimentent deux branches, dont une seule est activée à la fois par un calculateur de contrôle moteur (14), chaque branche comprenant des moyens de calcul de moyenne glissante, par intégration sur une durée déterminée et division par le nombre d'échantillons, lesdites durées étant différentes pour les deux branches.

5. Dispositif selon la revendication 4, **caractérisé en ce que** la durée est de 2,5 à 3 secondes pour une branche activée pendant les périodes de fonctionnement hors ralenti et pleine charge et réglable.

6. Dispositif selon la revendication 5, **caractérisé en ce que** la durée est réglable pour la branche activée au ralenti et généralement d'environ 4 secondes.

7. Dispositif selon l'une quelconque des revendications 1 à 5, **caractérisé en ce que** les moyens de comparaison comprennent des moyens de test pour comparer le signal de sortie des moyens fournissant une moyenne à une valeur de référence et pour fournir un signal d'incrémentation à un compteur (24) de test positif indiquant une dégradation et pour fournir un signal de décrémentation au compteur (24) en cas de test négatif, et des moyens pour provoquer un avertissement lorsque le contenu du compteur atteint une valeur déterminée, afin d'effectuer un filtrage statistique.

## Patentansprüche

1. Vorrichtung zum Erfassen der Verschlechterung eines Dreiwegekatalysators, der in einem Abgaskreis eines Verbrennungsmotors angeordnet ist, dessen Kammern ein homogenes Gemisch aufnehmen, umfassend einen Nichtproportional-Sensor (10), der auf dem Weg der Abgase stromabwärts des Katalysators (12) angeordnet ist, Mittel (18) zum Filtern des Ausgangssignals des Sensors, die die kontinuierliche Komponente des Signals entfernen, Mittel (20a, 20b) zum Bereitstellen eines gleitenden Mittelwertes des gefilterten Signals durch Integration und Division, Mittel (24) zum Vergleichen des genannten Mittelwertes mit einem Schwellenwert sowie Mittel zum Hemmen der Mittel zum Bereitstellen des Mittelwertes und der Mittel zum Vergleichen während des Betriebs des Motors mit voller Last, **dadurch gekennzeichnet, dass** die Mittel zum Filtern ein Bandpassfilter (18) umfassen, das einen Durchlassbereich auf halber Höhe zwischen 0,9 Hertz und der Ansprechgrenze des Katalysators in einem einwandfreien Betriebszustand hat.

2. Vorrichtung nach Anspruch 1, **dadurch gekennzeichnet, dass** die Mittel (18) zum Filtern einen einstellbaren Durchlassbereich auf halber Höhe zwischen ungefähr 0,9 und 4 Hertz haben.

3. Vorrichtung nach Anspruch 1 oder 2, **dadurch gekennzeichnet, dass** sie einen Abtaster (16) mit einem Analog-Digital-Umwandler zwischen dem Sensor (10) und dem Eingang eines Rechenelements umfasst, das die genannten Mittel umfasst oder diese bildet.

4. Vorrichtung nach Anspruch 1, 2 oder 3, **dadurch gekennzeichnet, dass** die Mittel (18) zum Filtern zwei Zweige versorgen, von denen gleichzeitig immer nur einer durch einen Rechner (14) zur Motorsteuerung aktiviert wird, wobei jeder Zweig Mittel zum Berechnen eines gleitenden Mittelwertes umfasst, durch Integration über eine vorgegebene Zeitspanne und Division durch die Probenanzahl, wobei die genannten Zeitspannen für die beiden Zweige unterschiedlich sind.

5. Vorrichtung nach Anspruch 4, **dadurch gekennzeichnet, dass** die Zeitspanne 2,5 bis 3 Sekunden für einen aktivierten Zweig während der Betriebszeiten außerhalb des Leerlaufs und außerhalb voller Last beträgt und einstellbar ist.

6. Vorrichtung nach Anspruch 5, **dadurch gekennzeichnet, dass** die Zeitspanne für den aktivierten Zweig im Leerlauf einstellbar ist und im allgemeinen ungefähr vier Sekunden beträgt.

7. Vorrichtung nach einem der Ansprüche 1 bis 5, **dadurch gekennzeichnet, dass** die Mittel zum Vergleichen Testmittel umfassen, um das Ausgangssignal der einen Mittelwert liefernden Mittel mit einem Bezugswert zu vergleichen und ein Inkrementierungssignal an einen Zähler (24) bei einem positiven Test zu liefern, wodurch eine Verschlechterung angezeigt wird, und bei einem negativen Test ein Dekrementierungssignal an den Zähler (24) zu liefern, sowie Mittel zum Auslösen eines Alarmssignals, wenn der Inhalt des Zählers einen vorgegebenen Wert erreicht, um eine statistische Filterung durchzuführen.

## Claims

1. A device for detecting the deterioration of a three-way catalytic converter placed on an exhaust circuit of an internal combustion engine having chambers that receive a homogenous mixture, the device comprising a non-proportional sensor (10) placed downstream from the converter (12) on the path of the exhaust gas, means (18) for filtering the signal output by the sensor to eliminate the DC component from the signal, means (20a, 20b) for providing a sliding average of the filtered signal by interacting and dividing, and means (24) for comparing said average with a threshold, and means for inhibiting the average-delivering means and the comparator means while the engine is operating at full load, the device being **characterized in that** the filter means comprise a bandpass filter (18) having a half-height passband lying in the range 0.9 Hz to the response limit of the catalyst in a state of correct operation.

2. A device according to claim 1, **characterized in that** the filter means (18) have a half-height passband lying in the range 0.9 Hz to 4 Hz approximately, which range is adjustable.

3. A device according to claim 1 or claim 2, **characterized in that** it includes a sampler with analog-to-digital conversion (16) between the sensor (10) and the input of a calculation member including said means or constituting them.

4. A device according to claim 1, 2, or 3, **characterized in that** the filter means (18) feed two branches, only one of which is activated at any one time by an engine control computer (14), each branch comprising mans for calculating a moving average, by integrating over a determined duration and by dividing by the number of samples, said durations differing for the two branches.

5. A device according to claim 4, **characterized in that** the duration is 2.5 s to 3 s for a branch that is activated during periods of operation not including idling or full load, which duration is adjustable.

6. A device according to claim 5, **characterized in that** the duration is adjustable for the branch that is activated during idling, and is generally about 4 s.

7. A device according to any one of claims 1 to 5, **characterized in that** the comparator means comprise test means for comparing the output signal from the means that provide an average with a reference value, and for providing an increment signal to a counter (24) in the event of a positive test indicating deterioration, and for providing a decrement signal to the counter (24) when the test is negative, and means for issuing a warning when the content of the counter reaches a determined value, in order to perform statistical filtering.
